# EUROPÄISCHE PATENTSCHRIFT

(11) **EP 1 262 313 B1**
(45) Veröffentlichungstag und Bekanntmachung des Hinweises auf die Patenterteilung: **16.12.2009**
(21) Anmeldenummer: 02010899.9
(22) Anmeldetag: 16.05.2002
(51) Int. Cl.: B32B 27/12, B32B 3/08, E04F 15/04

(54) **Fussbodenlaminat**
floor laminate
Stratifié pour sols

(30) Priorität: 29.05.2001 DE 20108951 U
(43) Veröffentlichungstag der Anmeldung: 04.12.2002
(73) Patentinhaber: ANDY Holzprodukte GmbH, 47441 Moers (DE)
(72) Erfinder: Dammers, Dirk, 47506 Neukirchen-Vluyn (DE)
(74) Vertreter: DR. STARK & PARTNER

(56) Entgegenhaltungen:
- EP-A- 0 197 324
- WO-A-96/12857
- DE-A- 2 537 409
- DE-A- 19 951 812
- DE-C- 19 830 778
- DE-U- 20 001 717
- DE-U- 29 811 995

## Beschreibung

Die Erfindung betrifft ein Fußbodenlaminat, mit einer oberseitigen Nutz- und Dekorlage und einer mit dieser verbundenen unterseitigen Trägerplatte.

Aus der Praxis sind derartige Laminate bekannt, die rechtwinklig ausgeprägte Seitenkanten aufweisen, wobei die Längsseitenkanten eine mit nut- bzw. federartige Kantengestaltung zur Verbindung benachbarter Laminate aufweisen.

Im verlegten Zustand weist die Gesamtheit der Laminate eine plane Oberfläche mit aneinander angrenzenden und direkt anschließenden Kanten der einzelnen Laminate auf.

Nachteilig hierbei ist, dass auf diese Weise zwar ein Parkettboden oder dergleichen nachbildbar ist, jedoch kostengünstige Nachbildungen von anders ausgestalteten Holzböden nicht möglich sind.

*Aus der* US 3,204,380 *ist beispielsweise eine quadratische Akustik-Deckenplatte bekannt, die abgeschrägte Kantenbereichte an ihren vier Seitenkanten aufweist. Die Kanten sind weiterhin mit nut- bzw. federartigen Befestigungsbereichen versehen. Die Akustik-Deckenplatte besteht dabei aus einer porösen Faserplatte, die unterseitig mit einer dünnen Dekorlage überzogen ist.*

*Die* WO 01/96688 *zeigt einen Fußbodenbelag, der abgeschrägte Kantenbereiche an den vier Seitenkanten seiner Paneele aufweist. Die Kanten sind weiterhin mit nut- bzw. federartigen Befestigungsbereichen versehen. Die Paneele bestehen dabei jeweils aus einer Platte, die oberseitig mit einer Dekorlage überzogen ist, wobei die abgeschrägten Kantenbereichen mit separaten Bereichen einer Dekorlage abgedeckt sind.*

Aufgabe der Erfindung ist es, die vorgenannten Nachteile zu vermeiden und ein Laminat anzugeben, dass einfach und kostengünstig herstellbar ist und eine Nachbildung von Holzböden mit unebener bzw. zweidimensional verformter Oberfläche ermöglicht.

Diese Aufgabe wird gelöst durch ein Fußbodenlaminat ***gemäß dem kennzeichnenden Teil von Patentanspruch 1*.** Hierdurch stoßen die einzelnen Laminatteile zwar an den jeweiligen Seitenkanten in herkömmlicher Weise aneinander, es entsteht jedoch ein Laminatboden mit einer unebenen bzw. zumindest zweidimensional verformter Oberfläche, wie bei einem Dielenboden oder dergleichen. Je nach ausgewählter Geometrie der Randbereiche und abhängig von gezielten Farbänderungen in den entsprechenden Randbereichen kann dieser Eindruck noch verstärkt werden und es lassen sich sogar durch Schwarzfärbung und Höhenunterschiede Fugen wie bei einem groben Holzboden nachbilden.

Dabei kann das Laminat insbesondere als längliche Platte ausgebildet sein, es sind aber auch verschiedenste andere Formen möglich.

Die Trägerplatte kann z. B. eine Holzwerkstoffplatte, insbesondere Spanplatte, Faserplatte, MDF- oder HDF-Platte sein. Es sind aber auch Platten aus Kunststoff, insbesondere Hohlkunststoff, der vorzugsweise mit aufgeschäumtem Material verfüllt ist, möglich.

Vorzugsweise ***weist*** die Oberfläche allseitig abgerundete oder abgeschrägte Seitenkanten auf, so dass eine vollständige an übliche Holzböden angepasste Nachbildung durch Laminat möglich ist.

Erfindungsgemäß ***ist*** die oberseitige Nutz- und Dekorlage einstückig ausgebildet und ***umfasst*** die abgerundeten und die abgeschrägten Bereiche mit, so dass eine gute Abdichtung gewährleistet ist und durch eine einheitliche und fugen- oder kantenlose Oberfläche des Laminat ein Ablösen von Teilen der Nutz- und Dekorlage vermieden wird.

Vorteilhafterweise kann die Nutz- und Dekorlage aus elektronenstrahlgehärtetem Material, insbesondere aus Polyester und/oder Acrylaten bestehen, so dass eine einfache und kostengünstige Herstellung möglich ist und die guten Gebrauchseigenschaften bereits bei der Produktion der Nutzoberfläche erzielt werden. Somit ist eine weitere Verarbeitung ohne Hitzeeinwirkung möglich.

Ferner kann die Nutz- und Dekorlage mit anorganischen Zusatzstoffen, wie z. B. Korund oder dergleichen versetzt sein.

Auch kann das Laminat auf Melamin-Basis, insbesondere mit Glasfaserträgermatte aufgebaut sein.

Erfindungsgemäß kann das Laminat mit nut- bzw. federartigen Befestigungsbereichen versehene Längskanten aufweisen, so dass eine einfache Verlegbarkeit bei sicherem Zusammenhalt gewährleistet ist. Dabei kann die Feder einstückig mit dem Rest des Laminat ausgeführt sein oder als eingesetzte, insbesondere eingeklebte separate Feder ausgebildet sein und aus üblichen Materialien bestehen.

Ferner können die Befestigungsbereiche für eine leimlose Verlegung mit Rastvorsprung und entsprechender Aussparung versehen sein.

Weiterhin kann die Nutz- und Dekorlage eine unebene, insbesondere holzähnlich strukturierte Oberfläche aufweisen.

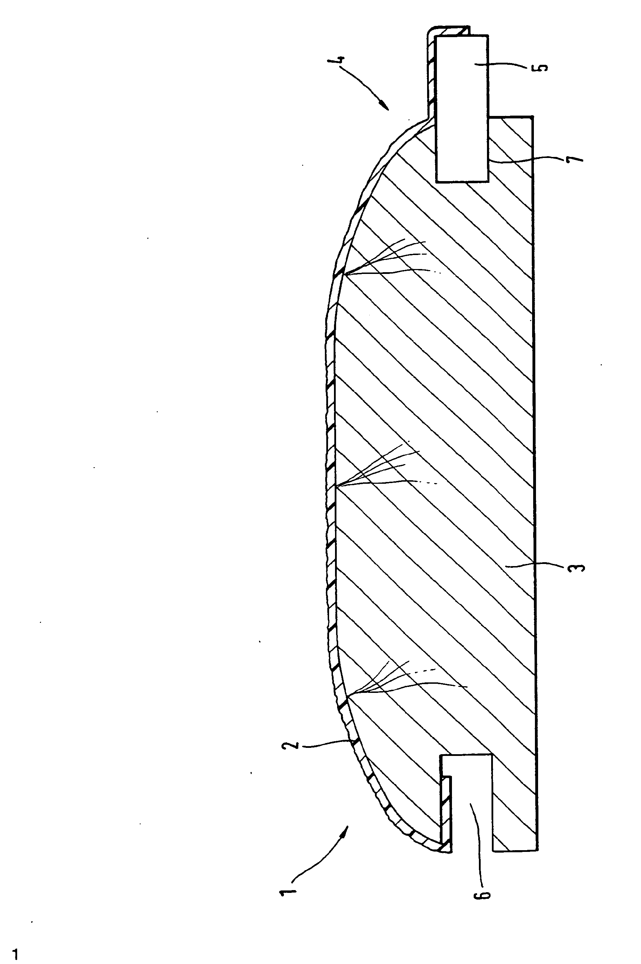

Im Folgenden wird ein in der Zeichnung dargestelltes Ausführungsbeispiel der Erfindung erläutert.

Die einzige Figur zeigt ein Laminat 1 mit einer oberseitigen Nutz- und Dekorlage 2 und einer mit dieser verbundenen unterseitgen Trägerplatte 3.

Die Trägerplatte 3 weist dabei oberseitig abgerundete Seitenkanten 4 auf, die in etwa auf der Mitte der Kantenfläche eine Feder 5 bzw. eine entsprechende Nut 6 aufweisen. Die Feder 5 ist im gezeigten Ausführungsbeispiel in eine ebenfalls nutförmige Aussparung 7 eingeklebt.

Weiterhin ist die Nutz- und Dekorlage 2 mit einer Erhebungen 8 und Vertiefungen 9 aufweisenden strukturierten Oberfläche 10 versehen.

## Patentansprüche

1. Fußbodenlaminat, mit einer oberseitigen Nutz- und Dekorlage (2) und einer mit dieser verbundenen unterseitigen Trägerplatte (3), **dadurch gekennzeichnet, dass** die Oberfläche (10) des Laminat (1) an zumindest zwei gegenüberliegenden Seitenkanten (4) abgerundet oder abgeschrägt ist, *dass weiterhin die oberseitige Nutz- und Dekorlage (2) einstückig ausgebildet ist und die abgerundeten und die abgeschrägten Bereiche mit umfasst, dass außerdem das Laminat (1) mit nut- bzw. federartigen Befestigungsbereichen versehene Längskanten aufweist, und dass die Befestigungsbereiche für eine leimlose Verlegung mit Rastvorsprung und entsprechender Aussparung versehen sind, wobei* die Oberfläche (10) allseitig abgerundete oder abgeschrägte Seitenkanten (4) aufweist.

2. Laminat (1) nach Anspruch 1, **dadurch gekennzeichnet, dass** die Nutz- und Dekorlage (2) aus elektronenstrahlgehärtetem Material, insbesondere aus Polyester und/oder Acrylaten besteht.

3. Laminat (1) nach Anspruch 1 oder 2, **dadurch gekennzeichnet, dass** die Nutz- und Dekorlage (2) mit anorganischen Zusatzstoffen, wie z. B. Korund oder dergleichen versetzt ist.

4. Laminat (1) nach einem der Ansprüche 1 bis 3, **dadurch gekennzeichnet, dass** das Laminat (1) auf Melamin-Basis, insbesondere mit Glasfaserträgermatte aufgebaut ist.

5. Laminat (1) nach einem der Ansprüche 1 bis 4, **dadurch gekennzeichnet, dass** die Nutz- und Dekorlage (2) eine unebene, insbesondere holzähnlich strukturierte Oberfläche (10) aufweist.

## Claims

1. Floor laminate, having an upper wear and decorative layer (2) and a lower support plate (3) connected to said layer, **characterized in that** the surface (10) of the laminate (1) is rounded or chamfered on at least two oppositely situated side edges (4), **in that** in addition the upper wear and decorative layer (2) is realized in one piece and incorporates the rounded and the chamfered regions, **in that** the laminate (1), moreover, has longitudinal edges provided with groove-like or spring-like securing regions, and **in that** the securing regions are provided with locking projection and corresponding recess for an adhesive-free laying, wherein the surface (10) has rounded or chamfered side edges (4) on all sides.

2. Laminate (1) according to Claim 1, **characterized in that** the wear and decorative layer (2) is produced from electron beam hardened material, in particular polyester and/or acrylates.

3. Laminate (1) according to Claim 1 or 2, **characterized in that** the wear and decorative layer (2) is mixed with anorganic additives, such as, for example, corundum or the like.

4. Laminate (1) according to one of Claims 1 to 3, **characterized in that** the laminate (1) is constructed on a melamine base, in particular with a glass fibre support mat.

5. Laminate (1) according to one of Claims 1 to 4, **characterized in that** the wear and decorative layer (2) has an uneven surface (10) structured in particular in a manner similar to wood.

## Revendications

1. Stratifié pour sols, avec sur le dessus une couche décorative et d'usage (2) et sur le dessous une plaque porteuse (3) assemblée à ladite couche, **caractérisé en ce que** la surface (10) du stratifié (1) est arrondie ou chanfreinée sur au moins deux bords latéraux opposés (4), **en ce que**, de plus, la couche supérieure décorative et d'usage (2) est réalisée d'un seul tenant et comprend elle-même les zones arrondies et les zones chanfreinées, **en ce que**, en outre, le stratifié (1) présente des bord longitudinaux pourvus de zones de fixation du genre rainure et languette, et **en ce que** les zones de fixation sont pourvues d'une saillie d'enclenchement et d'un évidement correspondant, en vue d'une pose sans colle, sachant que la surface (10) présente de tous côtés des bords latéraux (4) arrondis ou chanfreinées.

2. Stratifié (1) selon la revendication 1, **caractérisé en ce que** la couche décorative et d'usage (2) est constituée de matériau durci par bombardement électronique, en particulier de polyesters et/ou acrylates.

3. Stratifié (1) selon la revendication 1 ou 2, **caractérisé en ce que** la couche décorative et d'usage (2) est mélangée à des additifs anorganiques, comme par exemple du corindon ou analogues.

4. Stratifié (1) selon l'une des revendications 1 à 3, **caractérisé en ce que** le stratifié (1) présente une structure à base de mélamine, en particulier avec un mat porteur de fibres de verre.

5. Stratifié (1) selon l'une des revendications 1 à 4, **caractérisé en ce que** la couche décorative et d'usage (2) présente une surface (10) non plane, en particulier structurée à la manière de bois.
